# EUROPEAN PATENT SPECIFICATION

(11) **EP 4 312 446 B1**
(45) Date of publication and mention of the grant of the patent: **22.04.2026**
(21) Application number: 22187877.0
(22) Date of filing: 29.07.2022
(51) Int. Cl.: H04W 12/02

(54) **METHOD FOR ENHANCING PRIVACY IN AN ACCESS NETWORK**
VERFAHREN ZUR ERHÖHUNG DER PRIVATSPHÄRE IN EINEM ZUGANGSNETZWERK
PROCÉDÉ D'AMÉLIORATION DE LA CONFIDENTIALITÉ DANS UN RÉSEAU D'ACCÈS

(43) Date of publication of application: 31.01.2024
(73) Proprietor: Deutsche Telekom AG, 53113 Bonn (DE)
(72) Inventor: COLOM IKUNO, Josep, 2100 Korneuburg (AT)
(74) Representative: Vossius & Partner Patentanwälte Rechtsanwälte mbB

(56) References cited:
- WO-A1-2022/155511
- US-A1- 2021 256 159
- ANONYMOUS: "O-RAN Test and Integration Focus Group, End-to-End System Testing Framework Specification", no. O-RAN.TIFG.E2ETSTFWK.0-v01.00, 30 September 2020 (2020-09-30), pages 1 - 69, XP009539595, Retrieved from the Internet <URL:https://orandownloadsweb.azurewebsites.net/specifications>
- ANONYMOUS: "O-RAN Working Group 3 Near-Real-time RAN Intelligent Controller Architecture & E2 General Aspects and Principles", 1 February 2020 (2020-02-01), https://www.o-ran.org/specification-access, XP055775449, Retrieved from the Internet <URL:https://www.o-ran.org/s/ORAN-WG3E2AP-v0100_.docx>

## Description

### Field of the invention

This invention relates to a method for enhancing privacy in an Access Network, and an Access Network therefor.

### Background

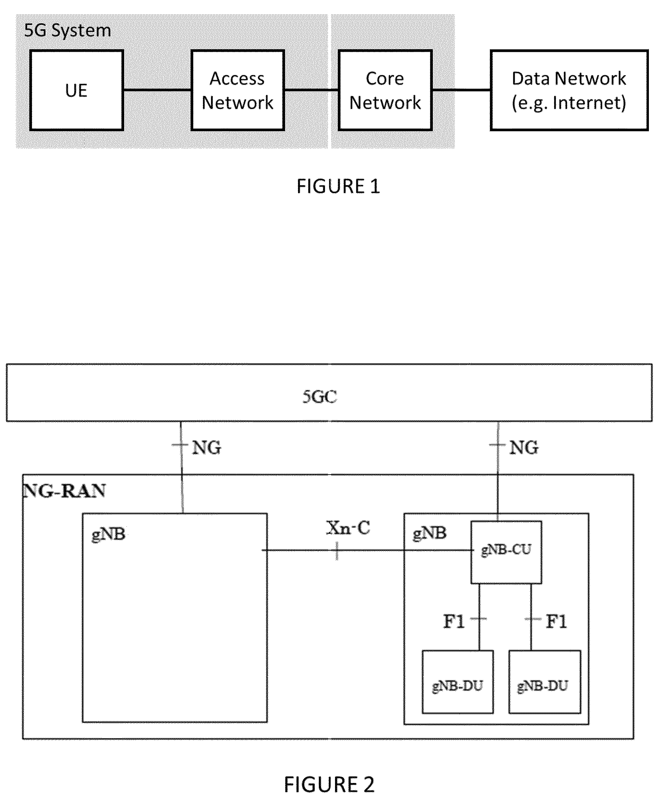

The current 5G system model is illustrated in FIG. 1. As illustrated in FIG. 1, the current model divides the mobile network in two main parts: Access Network (AN) and Core Network (CN). The objective of said model is to provide the UE with connectivity towards a Data Network (DN). Going in more detail, the UE communicates with the AN via an interface, which is used for conveying both signaling information and data traffic. For example, the AN may be a Radio Access Network (RAN) having a radio interface.

Currently, 3GPP standards define the RAN as consisting of a set of gNBs, which are considered to be either a single, monolithic entity or a set of functional entities. FIG. 2 shows the RAN overall architecture according to 3GPP TS 38.401. Further splits are also defined by 3GPP, such as a separation between control plane and user plane for the Control Unit (CU) and/or Distributed Unit (DU).

The current state of the art for Open RAN systems is based on O-RAN Alliance's specifications. O-RAN Alliance's specifications aim at specifying a build on top of 3GPP architecture and interfaces and further define interfaces and functional entities. The disaggregated RAN architecture based on CU/DU separation from 3GPP is the basis for the RAN architecture from O-RAN Alliance's specifications.

On top of the 3GPP-defined interfaces, the O-RAN specifications define additional interfaces. The most known additional interface of all is the open fronthaul (Open FH). The Open FH allows interoperability between different DU and Radio Unit (RU) vendors.

One of the main aspects of the O-RAN architecture is the availability of new functionality named the non-Real Time and near-Real Time RAN Intelligent Controllers (RICs). In detail, the O-RAN architecture supports additional control loops that are capable of plugging in logic tasked with steering RAN functionality:
- non-RT (non-Real Time) control loops: via O1 interface between SMO and O-RAN components. The SMO hosts a non-RT RIC.
- near-RT (near-Real Time) control loops: via E2 interface between near-RT RIC and O-RAN components.

Real Time (RT) control loops do not contain open interfaces as per the current O-RAN specification. In both the near-RT and non-RT RIC cases, additional logic is plugged into the system by means of "Apps". In particular, the term "xApps" is used in the near-RT case and the term "rApps" is used in the case of non-RT.

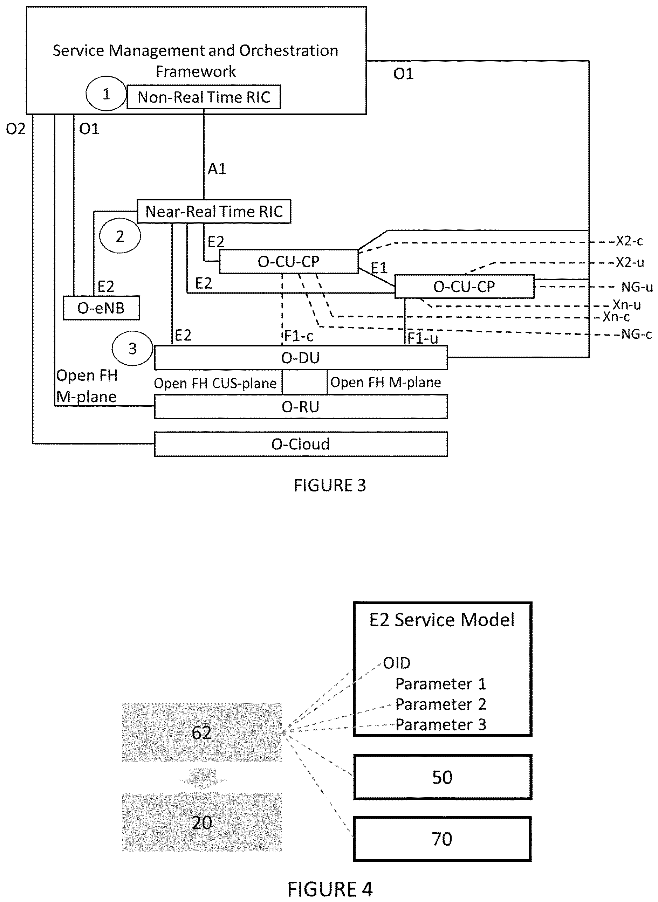

FIG. 3 illustrates an example of a O-RAN architecture. As shown in FIG. 3, the continued lines illustrate the O-RAN interfaces, whereas the dashed lines show the 3GPP interfaces. Furthermore, the circle: "1" illustrates the non-Real Time control loops; "2" illustrates the Near-Real Time control loops; and "3" illustrates the Real Time control loops. The typical ranges for these loops are the following:
- non-RT control loops ≥ 1s
- 10 ms ≤ Near-RT control loops < 1s
- RT control loops < 10 ms

A goal of non-RT RIC is to support intelligent RAN optimization by providing policy-based guidance, Machine Learning (ML) model management and enrichment information to the near-RT RIC function so that the RAN can optimize, e.g., RRM under certain conditions. It can also perform intelligent radio resource management function in non-real-time interval (i.e., greater than 1 second, such as switching off cells for energy saving). The non-RT RIC comprises two sub-functions:
- non-RT RIC Framework - Functionality internal to the SMO Framework that logically terminates the A1 interface and exposes the required services to rApps through its R1 interface.
- non-RT RIC Applications (rApps) - Modular applications that leverage the functionality exposed by the non-RT RIC Framework to perform RAN optimization and other functions. Services exposed to rApps via the R1 interface enable rApps to obtain information and trigger actions (e.g., policies, re-configuration) through the A1, O1, O2 and Open FH M-Plane related services.

A common application of rApps is in the field of Self-Organizing Network (SON), where a network is capable of detecting configuration conflicts and resolve these, e.g. avoiding Physical Cell Identity (PCI) conflicts when deploying a radio network.

The near-RT RIC is a logical function that enables near real-time control and optimization of E2 Nodes functions and resources via fine-grained data collection and actions over the E2 interface with control loops in the order of 10 ms-1s. E2 Nodes comprise the logical endpoint of the E2 interface on the RAN component, e.g. a O-DU can contain a E2 Node allowing a near-RT RIC to steer certain functionality in the O-DU such as access control to the cell. Near-RT RIC functionality is, analogously to the non-RT RIC, composed of:
- Near-RT RIC Framework
- The Near-RT RIC hosts one or more xApps that use E2 interface to collect near real-time information (e.g. on a UE basis or a Cell basis) and provide value added services. The Near-RT RIC control over the E2 Nodes is steered via the policies and the enrichment data provided via A1 from the non-RT RIC.

Some examples of functionality that can be implemented by means of xApps are: steering of specific users to certain cells and/or frequencies; adjusting QoS/QoE for specific users; MIMO beamforming; influence Radio Radio Management (RRM) functionality for certain users, e.g. access control; and gather mobility data from users, which can be used in Al/ML models for user prediction.

The near-RT RIC hosts xApp-based functionality. E2 nodes are the termination points of the E2 interface. In the current version of the specification, O-RAN nodes terminating E2 interface are for:
- NR access: O-CU-CP, O-CU-UP, O-DU or any combination,
- E-UTRA access: O-eNB

The functionalities supported by the E2 interface are currently based exclusively on Control Plane protocols. The E2 functions are grouped into the following categories:
- Near-RT RIC Services (REPORT, INSERT, CONTROL and POLICY).
- Near-RT RIC support functions, which include, e.g., E2 Interface Management (E2 Setup, E2 Reset, Reporting of General Error Situations etc.) and Near-RT RIC Service Update (capability exchange related to the list of E2 Node functions exposed over E2 etc.).

The xApps access information from the E2 nodes via the Shared Data Layer (SDL). The SDL is accessed via subscription management. In sum, the xApp subscription management (as defined in O-RAN WG3 RIC Architecture, clause 6.2.2):
- manages subscriptions from xApps to E2 Nodes;
- enforces authorization of policies controlling xApp access to messages;
- enables merging of identical subscriptions from different xApps into a single subscription toward an E2 Node.

The O-RAN RIC API describes a Subscribe Information procedure and an Information Push procedure. In addition, as an alternative to parameter subscription, information can also be explicitly fetched.

In terms of information being exchanged, the following parameters (from the current O-RAN specification) are relevant for the retrieval (via subscription or fetch) of E2 node parameters regardless of the direction of the request and/or push procedure (e.g. direction of the xApp towards Near-RT RIC platform, direction of the Near-RT RIC platform towards xApp, direction of the xApp towards Near-RT RIC platform, direction of the Near-RT RIC platform towards xApp): message type, xApp request ID, information type, delivery method, subscribe filter list, filter definition, information block, modification type, information unit, fetch filter list, filter definition.

The xApp request ID IE uniquely identifies each request made by the xApp. For SDL subscriptions, the xApp request ID is also used as the "subscription identifier" and is used in all related Information Push and Information Update Notify messages.

Filters and/or Information Type reference to one of the following identifiers: E2Node ID, E2 Node Component Type, RAN function OID List.

From the perspective of the E2 node, the operations are similar. The information that is exchanged via this protocol stack over the E2 interface is defined by E2 Service Models (E2SMs), e.g. the KPM E2SM defined in the O-RAN WG3 E2SM-KPM specification. A E2SM can be considered a data model defining information that can be provided by the E2 node, as well as the format of the data within messages exchanged with the E2 node (e.g. lists, enumerations, number formats, string). Each E2SM definition is accompanied by a ASN file including an OID for the given RAN function ID, with the ASN file describing the data types supported by the E2SM. A E2 node may support more than one E2SM (e.g. KPI monitoring and RAN control). E2 nodes supporting the same set of E2SMs can be considered of being of the same type.

The same, or analogous concept (e.g., based on Open API descriptions for interface description) can be used with O-RAN interfaces other than E2 (e.g. A1, O1, O2, Open FH). Similarly, the O-RAN interfaces can be extended to not only RAN but also to cover other Access Network (AN) cases, such as a wired AN, in which nodes can additionally contain DSLAMs, Broadband Remote Access Server (BRAS) and/or other AN nodes not limited to radio.

The term Access Network Intelligent Controller (AN-IC) is thus used to generically refer to a RIC or analogous intelligent controller applied to a radio-based or non-radio-based access network. Similarly, applications running on an AN-IC (e.g. xApps, rApps) are referred to as AN-IC applications and the node terminating an AN-IC interface (e.g. E2 interface) is referred to as interface node (e.g. E2 node).

While the O-RAN Alliance specifications define a set of E2SMs, for E2SMs that are not specified (e.g. proprietary data models), the E2SM has to be known to the near-RT RIC and the xApp using it. Thus, it does not need to be known to other xApps not using the given E2SM. In generic terms, in the following description the E2SM is referred to as the interface node service model (INSM).

From the common E2SM parameters defined in the O-RAN WG3 E2SM specification, the following parameters are examples of identifiers that could lead to an identification and/or tracking within the 5GS of a given user:
1) UE NGAP ID
2) RAN UE ID
3) Cell ID (e.g. PCI)
4) Tracking Area

Additional parameters that could be used in future and are privacy-relevant are subscriber-related identifiers such as SUPI, SUCI, 5G-GUTI, S-NSSAI.

WO 2022/155511 A1, US 2021/256159 A1, "O-RAN Test and Integration Focus Group, End-to-End System Testing Framework Specification" (2020-09-30) pages 1-69 XP009539595 and "O-RAN Working Group 3 Near-Real-time RAN Intelligent Controller Architecture & E2 General Aspects and Principles" (2020-02-01) XP055775449 are related prior art documents.

### Technical problem

In view of the above, it is apparent that the functionality extension and modularity offered by deploying a near real-time (near-RT) RAN Intelligent Controller (RIC) or non-RT RIC is very powerful. Furthermore, the information gathered by an xApp/rApp or group of xApps/rApps could potentially be used for tracking and/or monitoring user behavior.

In the current specification, the RIC provides data to RIC applications (e.g. xApps, rApps), with the RIC applications being trusted to handle the information appropriately.

However, it is not yet possible to modify values requested by RIC applications to remove sensitive data, nor be able to obfuscate, e.g., anonymize, such data or otherwise generate data analogous to the original data before being received by the RIC application.

In view of the above it is an object of the present invention to add additional functionality for the RIC to enable transparent interception and modification of parameters enroute towards RIC applications. The objective of such modifications (e.g., obfuscating, anonymizing) being that in the case the information collected by a RIC application is misused by and/or via said application, that said information cannot be mapped back to the original data and, especially, cannot be mapped back to specific users of the AN.

### Summary of the invention

This object is achieved with the features of the claims.

The invention is specified by the independent claims. Preferred embodiments are defined in the dependent claims. According to the invention, an operator could achieve the ability to deploy such functionality so that it is possible to:
1) Modify values requested by RIC applications to remove sensitive data (i.e. not all requested information is available)
2) Alternatively, be able to obfuscate/anonymize such data before being received by the RIC application (i.e. requested information is available, albeit in a transformed form)

While with approach 1) the functionality of some RIC applications may be constrained, with approach 2) RIC application functionality should be possible to be maintained while not explicitly sharing sensitive data.

Other aspects, features, and advantages will be apparent from the summary above, as well as from the description that follows, including the figures and the claims.

### Brief description of the drawings

In the drawings:
- FIG. 1: illustrates the concept of the current 5G system model.
- FIG. 2: illustrates the concept of the overall RAN.
- FIG. 3: illustrates an example of the O-RAN architecture covering also interfaces standardized by 3GPP.
- FIG. 4: illustrates an example of parameters considered for AN-IC security/privacy policy according to an embodiment of the invention.
- FIG. 5: illustrates an example method of the application of the security/privacy policy to received data from an interface node in accordance with an embodiment of the invention.
- FIG. 6: illustrates an example method where the generation of synthetic data is not received from an interface node in accordance with an embodiment of the invention.
- FIG. 7: illustrates an example method where modified data is written to the AN-IC Shared Data Layer or DB in accordance with an embodiment of the invention.
- FIG. 8: illustrates an example method where data is modified prior to being sent to the application in accordance with an embodiment of the invention.
- FIG. 9: illustrates an example method for enhancing privacy in an Access Network in accordance with an embodiment of the invention.
- FIG. 10: illustrates another example method for enhancing privacy in an Access Network in accordance with another embodiment of the invention.

### Detailed description of the invention

The present invention aims at allowing the application of a security/privacy policy based on what information an AN-IC application is requesting, the identity of the requester and/or the target (e.g. E2 Node) this request targets.

Parameters associated to the security/privacy policy are related to the data request, requester and request target, and are based on a combination of:
- What INSM (e.g. E2 Service Model, E2SM) the request refers to, such as OID of the E2 service model and/or parameter(s) belonging to said E2 Service Model
- Requester AN-IC application (e.g. xApp ID)
- Request target, that is the AN component being queried (e.g. based on E2 Node ID), which maps to a specific component (e.g. RU, CU, DU) providing the data.

FIG. 4 illustrates an example of parameters considered for RIC security policy according to an embodiment of the invention. The security/privacy policy 62 contains information what the action of the security policy should be regarding the information 20 flowing towards the AN-IC, and is mapped to an interface node 70, and/or applications 50 (e.g., xApps). The action can be one of the following: allow requested data; deny requested data; or modify the data so that it cannot be mapped 1:1 to the original data.

In particular, in accordance with an embodiment of the invention, the modification of data can be done, for example, by means of one or a combination of the following actions:
a. Suppression or generalization of data to achieve k-anonymity: i.e., replacing segments of subscriber identifiers with the same sequence of number; and/or
b. Adding noise to the data to achieve differential privacy: i.e., modifying the actual values such as KPIs being returned by the interface node; and/or
c. Generating synthetic data (i.e., "adding noise data points") to add additional data points to the data set.

The modification of data in any of the above options is particularly preferred, since it has the advantage that it can maintain xApp functionality while still providing protection of the data being accessed by the xApp.

Regarding the mode of operation for the RIC security/privacy policies, two modes of operation are proposed in accordance with an embodiment of the invention.

In a first mode, the security/privacy policy is applied to data before it is stored in the AN-IC's database. That is, on the data flow between interface node and AN-IC. With this mode, in case of modification of the data, the original data is not available in the AN-IC, only the modified data.

In a second mode, the security/privacy policy is applied to data when it is requested by AN-IC applications. That is, on the data flow between AN-IC applications and AN-IC. Here, in the second mode, in case of modification of the data, the original data is available in the AN-IC.

A further mode of operation is considered, in which a second AN-IC application realizes the security/privacy functionality, wherein requests of a AN-IC application are performed towards the second AN-IC application, i.e. the second AN-IC application acts as a middleman to the requests of the AN-IC application and applies the security/privacy policies.

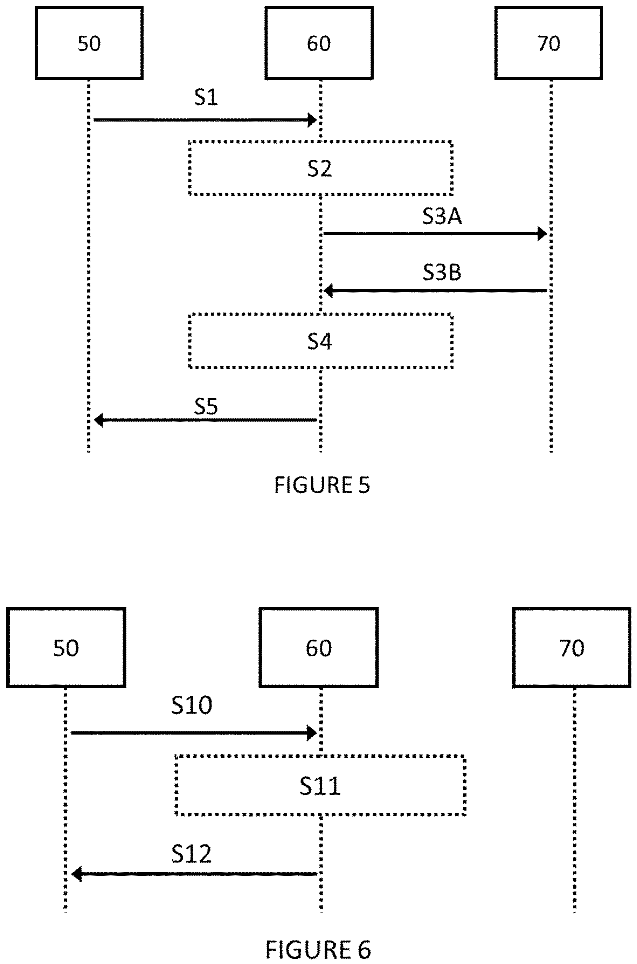

FIG. 5 illustrates an example method of the application of the security/privacy policy to received data from the interface node in accordance with an embodiment of the invention. In detail, FIG. 5 illustrates the interaction between the AN-IC application 50, the AN-IC 60 and the interface node 70. The method includes the following steps.

In step S1, the AN-IC application 50 sends a request of data to the AN-IC 60 (e.g. explicit data request, subscription to a certain kind of data).

In step S2, the security/privacy policy is applied to: grant the request, deny the request, or modify the data. If the request is denied, steps S2, S3 and S4 are skipped.

If the information is not available at the AN-IC 60, the information is requested, in step S3A, from the interface node 70 and is received, in step S3B, by the AN-IC 60.

In step S4, either before the information is stored in the AN-IC's shared data layer or after the information is stored in the shared data layer, the information is modified based on the security/privacy policy.

In step S5, if in step S2 the security/privacy policy indicates to deny, the application receives a message indicating the rejection of the request in step S1; if in step S2 the security/privacy policy indicates to modify, the application receives the modified information from the RIC 60.

FIG. 6 illustrates an example method where the generation of synthetic data is not received from an interface node in accordance with an embodiment of the invention.

For generated or artificial data (i.e. "statistical noise"), the procedure is similar to that depicted in FIG. 5, with the exception that the information is not retrieved from the interface node, but rather generated by the AN-IC itself. In this case, the information returned by the AN-IC is not information originating from the interface node but rather generated by the AN-IC. In detail, the method of FIG. 6 has the following steps.

In step S10, the AN-IC application 50 sends a request of/subscription to data (e.g. a AN-IC parameter such as a KPI from a CU) to the AN-IC 60.

In step S11, the RIC 60 generates the generated or artificial data (e.g. a KPI value in the range based in the INSM).

In step S12, the AN-IC 60 sends a message to the application 50 containing the generated or artificial data.

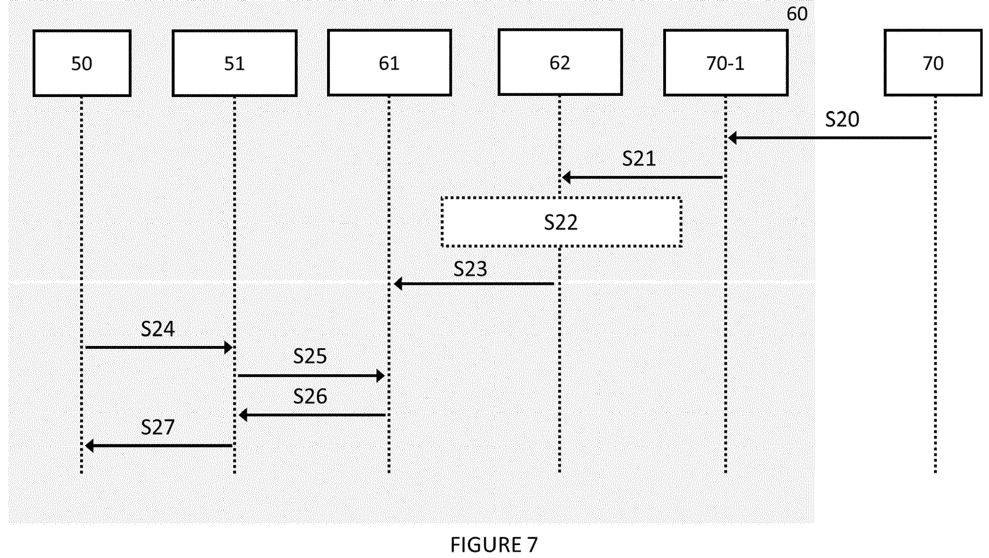

FIG. 7 illustrates an example method where modified data is written to a Shared Data Layer (SDL) or database (DB) 61 of the AN-IC 60 in accordance with an embodiment of the invention.

In step S20, the interface node 70 sends a message containing data to the interface termination point 70-1 (e.g. E2 termination point) within the AN-IC 60. Thereafter, the interface termination point 70-1 forwards, in step S21, the message to the security/privacy policy element 62.

In step S22, the security/privacy policy element 62 applies the security/privacy policy before the data is written into the DB or SDL 61.

In step S23, the modified data is stored in the data base or shared data layer 61.

In step S24, the application 50 sends a data request to the application API 51 (e.g. xApp API of the near-RT RIC). Here, the application API 51 forwards, in step S25 the data request to the DB or SDL 61.

In step S26, the DB or SDL 61 sends a response message including the modified data to application API 51.

Finally, in step S27, the application API 51 forwards the message containing the modified data to the application 50.

This mode has the advantage of computational simplicity and the fact that the original (that is, unmodified) data is not stored in the AN-IC. On the other hand, if pseudoanonymized information is provided, as each AN-IC application 50 would received the information concealed with the same mapping, it would be possible to track a given (anonymized) user across applications (e.g., across different xApps).

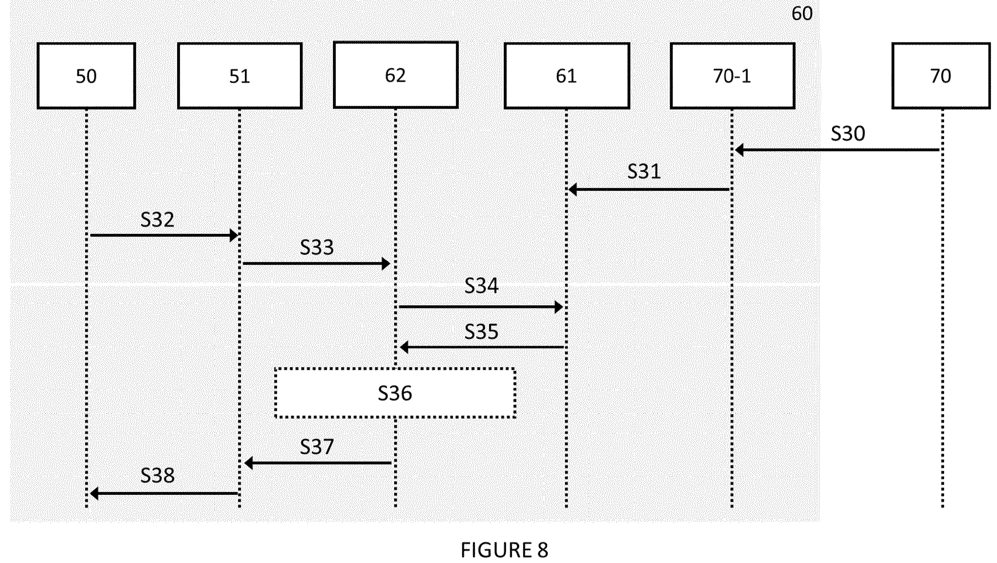

FIG. 8 illustrates an example method for the local mode where data is modified prior to being sent to the application in accordance with an embodiment of the invention.

In step S30, the interface node 70 sends a message containing data to the interface termination point 70-1. Thereafter, the interface termination point 70-1 forwards, in step S31, the message to the data base or shared data layer 61.

In step S32, the AN-IC application 50 sends a data request to the application API 51 (e.g. xApp API). Here, the application API 51 forwards, in step S33 the data request to the security/privacy policy element 62.

In step S34, the security/privacy policy element 62 sends a request to retrieve data to DB or SDL 61. In step S35, the security/privacy policy element 62 receives the retrieved data from the DB or SDL 61.

In step S36, the security/privacy policy element 62 applies the security/privacy policy before the data is send to the AN-IC application 50.

In step S37, the security/privacy policy element 62 sends a response message including the modified data to application API 51.

Finally, in step S38, the application API 51 forwards the message containing the modified data to the AN-IC application 50.

This mode has the advantage that each AN-IC application 50 (i.e., xApp) can potentially be served differently modified data sets, albeit at the cost of higher complexity and the need to store the original data in the AN-IC 60. While at the cost of complexity, using different identifier re-mappings, obfuscation and/or pseudoanonymization algorithms for different AN-IC applications 50 has the advantage of making it impossible to track users across different AN-IC applications 50.

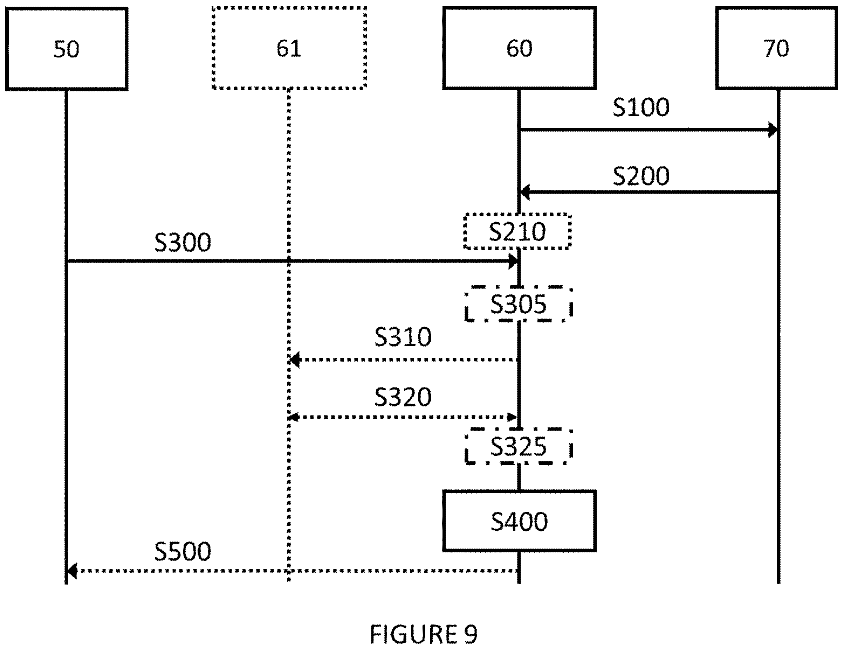

FIG. 9 illustrates an example method for enhancing privacy in an Access Network in accordance with an embodiment of the invention.

As shown in FIG. 9, the AN is comprised of several AN components and a AN Intelligent Controller 60 (AN-IC). In particular, at least one of the AN components contains an interface node 70, especially a E2 Node.

In accordance with the embodiment, a AN-IC is composed of at least the following elements: a AN-IC application 50; one or more policy elements (not shown in FIG. 9); and one or more logical connections between the AN-IC 60 and the interface nodes 70 (e.g., a E2 interface).

The AN-IC application 50 can request and/or subscribe to one or more AN parameters from an interface node 70, via the AN-IC 60.

Further, each policy element contains a behavior to be applied to a matching requests or a related AN parameter. In this regard, a "behavior" may refer to: allowing/rejecting a request, modifying a AN parameter, and/or generating a further AN parameter analogous to the AN parameter.

In more detail, the meaning of the expression "modifying a AN parameter" may, but is not limited to, refer to: replacing, removing, re-mapping, hashing, encrypting, obscuring or otherwise altering AN parameters or parts thereof, especially in the case of AN parameters referring to one or more identifiers related to: a subscriber, area, AN component, time, network identifier and/or network area.

In this embodiment, the AN-IC 60 matches policy elements to matching requests. In more detail, the method comprises the following steps.

In step S100, the AN-IC 60 sends to an interface node 70 a request for a AN parameter related to the interface node 70.

In step S200, the AN-IC 60 receives from the interface node 70 an interface node message containing the AN parameter requested in the step S100.

In step S300, the AN-IC 60 receives from the AN-IC application 50 a further request for the AN parameter requested in the step S100.

In step S400, the AN-IC 60 matches the further request to a policy element based on the information contained in the further message request or interface node message. For example, the matching of the further request to a policy element may refer to at least one of the following:
- interface node and/or interface node type, especially an interface node identifier or an Object Identifier, OID identifying the type of the interface node, especially a E2 node and/or E2 Service Model, E2SM;
- requested AN parameter, especially an Object Identifier, OID identifying a variable within an interface node or within a E2 Service Model; and
- requester AN-IC application 50, especially an xApp application identifier or rApp application identifier.

The method described above with reference to FIG. 9 may further comprise some additional elements and optional steps (denoted with dotted lines in FIG. 9) as explained below.

In a preferred embodiment, the AN may be a Radio Access Network (RAN). Further, an AN component may be one of: a Radio Unit (RU); a Central Unit (CU); or a Distributed Unit (DU).

In a preferred embodiment, the method may further comprise a step S500 where the AN-IC 60 sends to the AN-IC application 50, a message which content depends on the indication by the matching behavior. For example, the message may comprise:
- a further AN parameter analogous to the AN parameter, if the matching behavior indicates generating a further AN parameter analogous to the AN parameter;
- a modified AN parameter derived from the AN parameter, if the matching behavior indicates modifying a AN parameter; and
- a message rejecting the application request, if the matching behavior indicates rejecting the request.

In a preferred embodiment, the method may further comprise a step S210 where the AN-IC applies the behavior from the matching policy element to the AN parameter received in the receiving step S200.

In a preferred embodiment, the AN-IC may further comprise a Shared Data Layer (SDL) 61 for storing AN parameters. In that case, step S210 is not performed and the method may further comprise the following preferred alternatives.

In a preferred alternative, the method may further comprise a step S310 of storing, after the receiving step S200, by the AN-IC, the received AN parameter in the SDL 61. Once stored in the SDL 61, the AN-IC may retrieve, in step S320, the AN parameter from the SDL 61 and apply, in step S325, the behavior from the matching policy element to the retrieved AN parameter.

The above alternative has the advantage that each AN-IC application 50 (e.g., xApps/rApps) can potentially be served differently modified data sets, albeit at the cost of higher complexity and the need to store the original data in the AN-IC 60. While at the cost of complexity, using different identifier re-mappings for different AN-IC applications 50 has the advantage of making it impossible to track users across different AN-IC applications 50.

In an additional preferred alternative, the method may further comprise a step S305 of applying, by the AN-IC, the behavior from the matching policy element to the AN parameter, prior to the storing step S310. The step S310 is the same as the one described in the above preferred alternative. Thereafter, the AN-IC may already retrieve, in step S320, the AN parameter from the SDL 61.

The above alternative has the advantage of computational simplicity and the fact that the original (that is, unmodified) data is not stored in the AN-IC. On the other hand, even if pseudoanonymized information is provided, it would be possible to track a given (anonymized) user across applications (e.g., xApps/rApps).

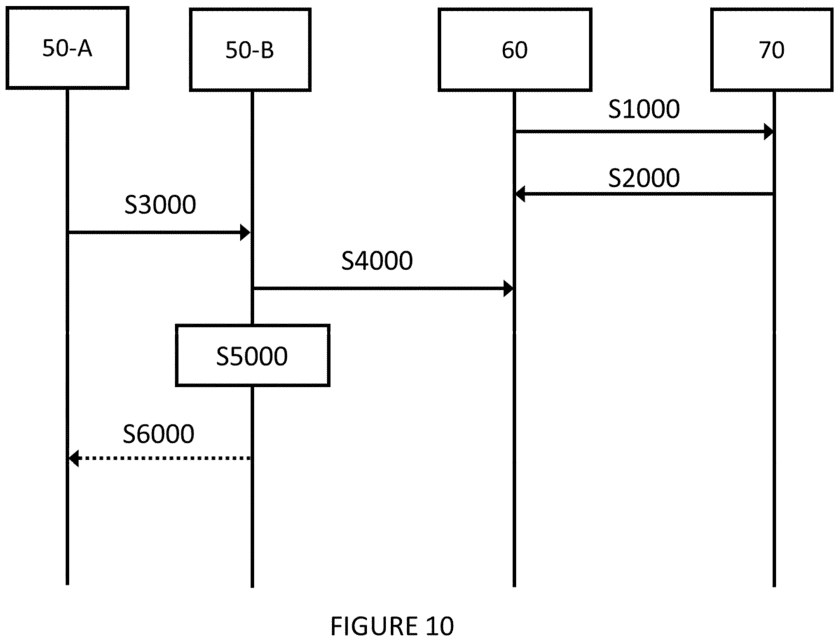

In an alternative implementation, FIG. 10 illustrates another example method for enhancing privacy in an Access Network in accordance with another embodiment of the invention. The embodiment illustrated in FIG. 10 differs from the one of FIG. 9 in that the above-described innovative functionality (performed mainly by the AN-IC in the embodiment of FIG. 9) is performed by a second AN-IC application 50-B, instead of the AN-IC. Therefore, although the implementation is different, the embodiments of FIGs. 9 and 10 are alternative solutions to the above-mentioned technical problem.

In detail, FIG. 10 illustrates a method for enhancing privacy in an Access Network.

As shown in FIG. 10, the AN is comprised of several AN components and a AN Intelligent Controller 60 (AN-IC). In particular, at least one of the AN components contains an interface node 70, especially a E2 Node.

In accordance with the embodiment, a AN-IC is composed of at least the following elements: an application 50-A; a AN-IC application 50-B; one or more policy elements; and one or more logical connections between the AN-IC 60 and the interface nodes 70 (e.g., a E2 interface).

In this embodiment, the application 50-A can request and/or subscribe to one or more AN parameters from an interface node 70, via the AN-IC application 50-B. In addition, the AN-IC application 50-B can request and/or subscribe to one or more AN parameters from an interface node 70, via the AN-IC.

Further, each policy element contains a behavior to be applied to a matching requests or a related AN parameter. In this regard, a "behavior" may refer to: allowing/rejecting a request, modifying a AN parameter, and/or generating a further AN parameter analogous to the AN parameter.

In more detail, the meaning of the expression "modifying a AN parameter" may, but is not limited to, refer to: replacing, removing, re-mapping, hashing, encrypting, obscuring or otherwise altering AN parameters or parts thereof, especially in the case of AN parameters referring to one or more identifiers related to: a subscriber, area, AN component, time, network identifier and/or network area.

In this embodiment, differing from the embodiment of FIG. 9, it is the AN-IC application 50-B who matches policy elements to matching requests, instead of the AN-IC 60 in FIG. 9. In more detail, the method of FIG. 10 comprises the following steps.

In step S1000, the AN-IC sends to an interface node 70 a request for a AN parameter related to the interface node 70.

In step S2000, the AN-IC receives from an interface node 70 an interface node message containing the AN parameter requested in the step S1000.

In step S3000, the application 50-A sends to the AN-IC application 50-B an application request for a second AN parameter. Here, the second AN parameter relates to the AN parameter.

In more detail, information related to the second AN parameter is, either explicitly or implicitly, contained within the AN parameter, e.g. the second AN parameter is the AN parameter, the AN parameter is a parameter list and the second AN parameter is contained therein, the second AN parameter is obtained by processing the AN parameter (e.g. applying a bit mask and/or by arithmetic means).

In step S4000, the AN-IC receives from the AN-IC application 50-B a further request for the AN parameter. Here, the AN parameter relates to the second AN parameter.

In step S4500, the AN-IC application 50-B receives from the AN-IC a message containing the AN parameter requested in the further request in the step S4000.

In step S5000, the AN-IC application 50-B matches the further request to a policy element based on the information contained in the application request for a second AN parameter in the step S3000.

For example, the matching of the further request to a policy element may refer to at least one of the following:
- interface node and/or interface node type, especially an interface node identifier or an Object Identifier, OID identifying the type of the interface node, especially a E2 node and/or E2 Service Model, E2SM;
- requested AN parameter, especially an Object Identifier, OID identifying a variable within an interface node or within a E2 Service Model; and
- requester AN-IC application, especially an xApp application identifier or rApp application identifier.

The method described above with reference to FIG. 10 may further comprise some additional elements and optional steps (denoted with dotted lines in FIG. 10) as explained below.

In a preferred embodiment, the method may further comprise a step S6000, where the AN-IC application 50-B sends to the application a message which content depends on the indication by the matching behavior. For example, the message may comprise:
- a second further AN parameter analogous to the second AN parameter of step S3000, if the matching behavior indicates generating a further AN parameter analogous to the AN parameter;
- a modified second AN parameter derived from the second AN parameter of step S3000, if the matching behavior indicates modifying a AN parameter; and
- a message rejecting the application request, if the matching behavior indicates rejecting the request.

Although sometimes the invention has been illustrated and described in detail with reference to "RIC/RIC applications" or "Access Node Intelligent Controllers (AN-IC)/AN-IC applications", it is noted that the expressions "RIC/RIC applications" and "Access Node Intelligent Controllers (AN-IC)/AN-IC applications" are fully interchangeable with each other in the context of an access network.

While the invention has been illustrated and described in detail in the drawings and foregoing description, such illustration and description are to be considered illustrative or exemplary and not restrictive. It will be understood that changes and modifications may be made by those of ordinary skill within the scope of the following claims.

Furthermore, in the claims the word "comprising" does not exclude other elements or steps, and the indefinite article "a" or "an" does not exclude a plurality. A single unit may fulfill the functions of several features recited in the claims. The terms "essentially", "about", "approximately" and the like in connection with an attribute or a value particularly also define exactly the attribute or exactly the value, respectively. Any reference signs in the claims should not be construed as limiting the scope.

## Claims

1. A method for enhancing privacy in an Access Network, AN, comprising one or more AN components and a AN Intelligent Controller, AN-IC, wherein at least a AN component contains an interface node, wherein a AN-IC is composed of at least:
a AN-IC application configured to request and/or subscribe to one or more AN parameters from an interface node, via the AN-IC;
one or more policy elements, each policy element containing a behavior to be applied to matching requests or a related AN parameter, wherein behavior refers to allowing/rejecting a request, modifying a AN parameter and/or generating a further AN parameter analogous to the AN parameter; and
one or more logical connections between the AN-IC and the interface nodes,
wherein the AN-IC is configured to match policy elements to matching requests, the method comprising the following steps:
sending (S100), by the AN-IC to an interface node, a request for a AN parameter related to the interface node;
receiving (S200), by the AN-IC from the interface node, an interface node message containing the requested AN parameter;
receiving (S300), by the AN-IC from the AN-IC application, a further request for the AN parameter;
matching (S400), by the AN-IC, the further request to a policy element based on information contained in the further request or interface node message, the information being at least one of:
interface node and/or interface node type being an interface node identifier or an Object Identifier, OID, identifying the type of the interface node;
requested AN parameter being an Object Identifier, OID identifying a variable within an interface node or within a E2 Service Model; and
requester AN-IC application being an xApp application identifier or rApp application identifier.

2. The method of claim 1, further comprising:
sending (S500), by the AN-IC to the AN-IC application, a message containing:
if the matching behavior indicates generating a further AN parameter analogous to the AN parameter, a further AN parameter analogous to the AN parameter;
if the matching behavior indicates modifying a AN parameter, a modified AN parameter derived from the AN parameter; and
if the matching behavior indicates rejecting the request, a message rejecting the application request.

3. The method of claim 1 or 2, wherein the AN is a Radio Access Network, RAN, wherein a AN component is one of: a Radio Unit, RU; a Central Unit, CU; or a Distributed Unit, DU, and/or
wherein modifying a AN parameter refers to replacing, removing, re-mapping, hashing, encrypting, obscuring or otherwise altering AN parameters or parts thereof.

4. The method of any of the previous claims, further comprising:
applying (S210), by the AN-IC, the behavior from the matching policy element to the received AN parameter.

5. The method of any of the previous claims, wherein the AN-IC further comprises a Shared Data Layer, SDL, configured to store AN parameters, further comprising:
storing (S310), after the receiving (S300) step, by the AN-IC, the received AN parameter in the SDL.

6. The method of claim 5, further comprising:
retrieving (S320), after the storing (S310) step, by the AN-IC, the AN parameter from the SDL;
applying (S325), by the AN-IC, the behavior from the matching policy element to the retrieved AN parameter.

7. The method of claim 5, further comprising:
before the storing (S310), applying (S305), by the AN-IC, the behavior from the matching policy element to the AN parameter; and
after the storing (S310), retrieving (S320), by the AN-IC, the AN parameter from the SDL.

8. A method for enhancing privacy in an Access Network, AN, comprising one or more AN components and a AN Intelligent Controller, AN-IC, wherein each AN component contains an interface node, wherein a AN-IC is composed of at least:
an application configured to request and/or subscribe to one or more AN parameters from an interface node, via a AN-IC application;
a AN-IC application configured to request and/or subscribe to one or more AN parameters from an interface node, via the AN-IC;
one or more policy elements, each policy element containing a behavior to be applied to matching requests or a related AN parameter, wherein behavior refers to allowing/rejecting a request, modifying a AN parameter and/or generating a further AN parameter analogous to the AN parameter; and
one or more logical connections between the AN-IC and the interface nodes,
wherein the AN-IC application is configured to match policy elements to matching requests, the method comprising the following steps:
sending (S1000), by the AN-IC to an interface node, a request for a AN parameter related to the interface node;
receiving (S2000), by the AN-IC from an interface node, an interface node message containing the requested AN parameter;
sending (S3000), by the application to the AN-IC application, an application request for a second AN parameter, wherein the second AN parameter relates to the AN parameter;
receiving (S4000), by the AN-IC from the AN-IC application, a further request for the AN parameter, wherein the AN parameter relates to the second AN parameter;
receiving (S4500), by the AN-IC application from the AN-IC, a message containing the AN parameter requested in the further request;
matching (S5000), by the AN-IC application, the further request to a policy element based on information contained in the application request for the second AN parameter, the information being at least one of:
interface node and/or interface node type being an interface node identifier or an Object Identifier, OID identifying the type of the interface node;
requested AN parameter being an Object Identifier, OID identifying a variable within a interface node or within a E2 Service Model; and
requester AN-IC application being an xApp application identifier or rApp application identifier.

9. The method of claim 8, further comprising:
sending (S6000), by the AN-IC application to the application, a message containing:
if the matching behavior indicates generating a further AN parameter analogous to the AN parameter, a second further AN parameter analogous to the second AN parameter;
if the matching behavior indicates modifying a AN parameter, a modified second AN parameter derived from the second AN parameter; and
if the matching behavior indicates rejecting the request, a message rejecting the application request.

10. An Access Network, AN, comprising one or more AN components and a AN Intelligent Controller (60), AN-IC, wherein at least a AN component contains an interface node (70), wherein a AN-IC (60) is composed of at least:
a AN-IC application (50) configured to request and/or subscribe to one or more AN parameters from an interface node (70), via the AN-IC (60);
one or more policy elements, each policy element containing a behavior to be applied to a matching requests or a related AN parameter, wherein behavior refers to allowing/rejecting a request, modifying a AN parameter and/or generating a further AN parameter analogous to the AN parameter; and
one or more logical connections between the AN-IC (60) and the interface nodes (70),
wherein the AN-IC (60) is configured to:
match policy elements to matching requests;
send, to an interface node (70), a request for a AN parameter related to the interface node (70);
receive, from the interface node (70), an interface node message containing the requested AN parameter;
receive, from the AN-IC application (50), a further request for the requested AN parameter;
match the further request to a policy element based on information contained in the further request or interface node message, the information being at least one of:
an E2 Service Model, E2SM, such as one or more parameters belonging to the E2 Service Model;
interface node being an interface node identifier or an Object Identifier, OID identifying the type of the interface node;
requested AN parameter being an Object Identifier, OID identifying a variable within an interface node or within a E2 Service Model; and
requester AN-IC application (50) being an xApp application identifier or rApp application identifier.

11. The AN of claim 10, wherein:
the AN is a Radio Access Network, RAN, wherein a AN component is one of: a Radio Unit, RU; a Central Unit, CU; or a Distributed Unit, DU, and/or
the AN-IC (60) is configured to send to the AN-IC application (50), a message containing:
if the matching behavior indicates generating a further AN parameter analogous to the AN parameter, a further AN parameter analogous to the AN parameter;
if the matching behavior indicates modifying a AN parameter, a modified AN parameter derived from the AN parameter; and
if the matching behavior indicates rejecting the request, a message rejecting the application request.

12. The AN of claim 10 or 11,
wherein modifying a AN parameter refers to replacing, removing, re-mapping, hashing, encrypting, obscuring or otherwise altering AN parameters or parts thereof, and/or
the AN-IC (60) is further configured to apply the behavior from the matching policy element to the AN parameter received from the interface node (70).

13. The AN of any of claims 10 to 12, wherein the AN-IC (60) further comprises a Shared Data Layer (61), SDL, configured to store AN parameters, and the AN-IC (60) is further configured to:
store, after receiving the further request for the requested AN parameter, the received AN parameter in the SDL (61);
retrieve, the AN parameter from the SDL (61);
apply the behavior from the matching policy element to the retrieved AN parameter.

14. The AN of any of claims 10 to 12, wherein the AN-IC (60) further comprises a Shared Data Layer (61), SDL, configured to store AN parameters, and the AN-IC (60) is further configured to:
apply, the behavior from the matching policy element to the AN parameter;
store, after receiving the further request for the requested AN parameter, the received AN parameter in the SDL (61); and
retrieve, by the AN-IC (60), the AN parameter from the SDL (61).

15. An Access Network, AN, comprising one or more AN components and a AN Intelligent Controller (60), AN-IC, wherein each AN component contains an interface node (70), wherein a AN-IC (60) is composed of at least:
an application (50-A) configured to request and/or subscribe to one or more AN parameters from an interface node (70), via a AN-IC application (50-B);
a AN-IC application (50-B) configured to request and/or subscribe to one or more AN parameters from an interface node (70), via the AN-IC (60);
one or more policy elements, each policy element containing a behavior to be applied to matching requests or a related AN parameter, wherein behavior refers to allowing/rejecting a request, modifying a AN parameter and/or generating a further AN parameter analogous to the AN parameter; and
one or more logical connections between the AN-IC (60) and the interface nodes (70), wherein:
the AN-IC application (50-B) is configured to match policy elements to matching requests;
the AN-IC (60) is configured to send to an interface node (70), a request for a AN parameter related to the interface node (70);
the AN-IC (60) is configured to receive from an interface node (70), an interface node message containing the requested AN parameter;
the application (50-A) is configured to send to the AN-IC application (50-B), an application request for a second AN parameter, wherein the second AN parameter relates to the AN parameter;
the AN-IC (60) is configured to receive from the AN-IC application (50-B), a further request for the AN parameter, wherein the AN parameter relates to the second AN parameter;
the AN-IC application (50-B) is configured to receive from the AN-IC (60) a message containing the AN parameter requested in the further request;
the AN-IC application (50-B) is configured to match the further request to a policy element based on information contained in the application request for a second AN parameter, the information being at least one of:
interface node and/or interface node type being an interface node identifier or an Object Identifier, OID identifying the type of the interface node;
requested AN parameter, being an Object Identifier, OID identifying a variable within a interface node or within a E2 Service Model; and
requester AN-IC application (50-B) being an xApp application identifier or rApp application identifier.

## Patentansprüche

1. Verfahren zum Verbessern der Privatsphäre in einem Zugangsnetzwerk, AN, aufweisend eine oder mehrere AN-Komponenten und eine intelligente AN-Steuerung, AN-IC, wobei mindestens eine AN-Komponente einen Schnittstellenknoten enthält, wobei eine AN-IC zusammengesetzt ist aus mindestens:
einer AN-IC-Anwendung, die konfiguriert ist, um einen oder mehrere AN-Parameter von einem Schnittstellenknoten über die AN-IC anzufordern und/oder zu abonnieren;
einem oder mehreren Richtlinienelementen, wobei jedes Richtlinienelement ein Verhalten enthält, das auf übereinstimmende Anfragen oder einen zugehörigen AN-Parameter anzuwenden ist, wobei sich Verhalten auf das Zulassen/Ablehnen einer Anfrage, das Modifizieren eines AN-Parameters und/oder das Erzeugen eines weiteren AN-Parameters analog zu dem AN-Parameter bezieht; und
einer oder mehreren logischen Verbindungen zwischen dem AN-IC und den Schnittstellenknoten,
wobei die AN-IC konfiguriert ist, um Richtlinienelemente übereinstimmenden Anfragen zuzuordnen, wobei das Verfahren die folgenden Schritte aufweist:
Senden (S100) einer Anfrage für einen AN-Parameter bezogen auf den Schnittstellenknoten von der AN-IC an einen Schnittstellenknoten;
Empfangen (S200) einer Schnittstellenknoten-Nachricht von dem Schnittstellenknoten, die den angeforderten AN-Parameter enthält, durch die AN-IC;
Empfangen (S300) einer weiteren Anfrage für den AN-Parameter durch die AN-IC von der AN-IC-Anwendung;
Zuordnen (S400), durch die AN-IC, der weiteren Anfrage zu einem Richtlinienelement basierend auf in der weiteren Anfrage oder Schnittstellenknotennachricht enthaltenen Informationen, wobei die Informationen mindestens eines sind von:
Schnittstellenknoten und/oder Schnittstellenknotentyp, wobei es sich um eine Schnittstellenknoten-Kennung oder eine Objektkennung, OID, handelt, die den Typ des Schnittstellenknotens identifiziert;
angefordertem AN-Parameter, der ein Objektidentifikator, OID, ist, der eine Variable innerhalb eines Schnittstellenknotens oder innerhalb eines E2-Dienstmodells identifiziert; und
Anforderer-AN-IC-Anwendung, die eine xApp-Anwendungskennung oder rApp-Anwendungskennung ist.

2. Verfahren nach Anspruch 1, ferner aufweisend:
Senden (S500) einer Folgendes enthaltenden Nachricht durch die AN-IC an die AN-IC-Anwendung:
wenn das Zuordnungsverhalten das Erzeugen eines weiteren AN-Parameters analog zu dem AN-Parameter anzeigt, einen weiteren AN-Parameter analog zu dem AN-Parameter;
wenn das Zuordnungsverhalten eine Modifikation eines AN-Parameters anzeigt, einen modifizierten AN-Parameter, der von dem AN-Parameter abgeleitet ist; und
wenn das Zuordnungsverhalten eine Ablehnung der Anfrage anzeigt, eine Nachricht, die die Anwendungsanfrage ablehnt.

3. Verfahren nach Anspruch 1 oder 2, wobei das AN ein Funkzugangsnetz, RAN, ist, wobei eine AN-Komponente eines ist von: einer Funkeinheit, RU; einer Zentraleinheit, CU; oder einer verteilten Einheit, DU, und/oder
wobei das Modifizieren eines AN-Parameters sich auf das Ersetzen, Entfernen, Neu-Zuordnen, Hashen, Verschlüsseln, Verschleiern oder anderweitiges Ändern von AN-Parametern oder Teilen davon bezieht.

4. Verfahren nach einem der vorstehenden Ansprüche, ferner aufweisend:
Anwenden (S210), durch die AN-IC, des Verhaltens aus dem übereinstimmenden Richtlinienelement auf den empfangenen AN-Parameter.

5. Verfahren nach einem der vorstehenden Ansprüche, wobei die AN-IC ferner eine gemeinsame Datenschicht, SDL, aufweist, die konfiguriert ist, um AN-Parameter zu speichern, ferner aufweisend:
Speichern (S310), nach dem Empfangs-Schritt (S300), durch die AN-IC, des empfangenen AN-Parameters in der SDL.

6. Verfahren nach Anspruch 5, ferner aufweisend:
Abrufen (S320) des AN-Parameters aus der SDL durch die AN-IC nach dem Speicher-Schritt (S310);
Anwenden (S325) durch die AN-IC des Verhaltens aus dem übereinstimmenden Richtlinienelement auf den empfangenen AN-Parameter.

7. Verfahren nach Anspruch 5, ferner aufweisend:
vor dem Speichern (S310) Anwenden (S305), durch die AN-IC, des Verhaltens aus dem übereinstimmenden Richtlinienelement auf den AN-Parameter; und
nach dem Speichern (S310) Abrufen (S320), durch die AN-IC, des AN-Parameters aus der SDL.

8. Verfahren zum Verbessern der Privatsphäre in einem Zugangsnetzwerk, AN, aufweisend eine oder mehrere AN-Komponenten und eine intelligente AN-Steuerung, AN-IC, wobei jede AN-Komponente einen Schnittstellenknoten enthält, wobei eine AN-IC zusammengesetzt ist aus mindestens:
einer Anwendung, die konfiguriert ist, um einen oder mehrere AN-Parameter von einem Schnittstellenknoten über eine AN-IC-Anwendung anzufordern und/oder zu abonnieren;
einer AN-IC-Anwendung, die konfiguriert ist, um einen oder mehrere AN-Parameter von einem Schnittstellenknoten über die AN-IC anzufordern und/oder zu abonnieren;
einem oder mehreren Richtlinienelementen, wobei jedes Richtlinienelement ein Verhalten enthält, das auf übereinstimmende Anfragen oder einen zugehörigen AN-Parameter anzuwenden ist, wobei sich Verhalten auf das Zulassen/Ablehnen einer Anfrage, das Modifizieren eines AN-Parameters und/oder das Erzeugen eines weiteren AN-Parameters analog zu dem AN-Parameter bezieht; und
einer oder mehreren logischen Verbindungen zwischen dem AN-IC und den Schnittstellenknoten,
wobei die AN-IC-Anwendung konfiguriert ist, um Richtlinienelemente übereinstimmenden Anfragen zuzuordnen, wobei das Verfahren die folgenden Schritte aufweist:
Senden (S1000) einer Anfrage für einen AN-Parameter bezogen auf den Schnittstellenknoten von der AN-IC an einen Schnittstellenknoten;
Empfangen (S2000) einer Schnittstellenknoten-Nachricht von einem Schnittstellenknoten, die den angeforderten AN-Parameter enthält, durch die AN-IC;
Senden (S3000) einer Anwendungsanfrage für einen zweiten AN-Parameter durch die Anwendung an die AN-IC-Anwendung, wobei der zweite AN-Parameter sich auf den AN-Parameter bezieht;
Empfangen (S4000) einer weiteren Anfrage für den AN-Parameter durch die AN-IC von der AN-IC-Anwendung, wobei der AN-Parameter sich auf den zweiten AN-Parameter bezieht;
Empfangen (S4500) einer Nachricht, die den in der weiteren Anfrage angeforderten AN-Parameter enthält, durch die AN-IC-Anwendung von der AN-IC;
Zuordnen (S5000), durch die AN-IC-Anwendung, der weiteren Anfrage zu einem Richtlinienelement basierend auf in der Anwendungsanfrage für den zweiten AN-Parameter enthaltenen Informationen, wobei die Informationen mindestens eines sind von:
Schnittstellenknoten und/oder Schnittstellenknotentyp, wobei es sich um eine Schnittstellenknoten-Kennung oder eine Objektkennung, OID, handelt, die den Typ des Schnittstellenknotens identifiziert;
angefordertem AN-Parameter, der ein Objektidentifikator, OID, ist, der eine Variable innerhalb eines Schnittstellenknotens oder innerhalb eines E2-Dienstmodells identifiziert; und
Anforderer-AN-IC-Anwendung, die eine xApp-Anwendungskennung oder rApp-Anwendungskennung ist.

9. Verfahren nach Anspruch 8, ferner aufweisend:
Senden (S6000) einer Folgendes enthaltenden Nachricht durch die AN-IC-Anwendung an die Anwendung:
wenn das Zuordnungsverhalten das Erzeugen eines weiteren AN-Parameters analog zu dem AN-Parameter anzeigt, einen zweiten weiteren AN-Parameter analog zu dem zweiten AN-Parameter;
wenn das Zuordnungsverhalten eine Modifikation eines AN-Parameters anzeigt, einen modifizierten zweiten AN-Parameter, der von dem zweiten AN-Parameter abgeleitet ist; und
wenn das Zuordnungsverhalten eine Ablehnung der Anfrage anzeigt, eine Nachricht, die die Anwendungsanfrage ablehnt.

10. Zugangsnetzwerk (AN), aufweisend eine oder mehrere AN-Komponenten und eine intelligente AN-Steuerung (60), AN-IC, wobei mindestens eine AN-Komponente einen Schnittstellenknoten (70) enthält, wobei eine AN-IC (60) zusammengesetzt ist aus mindestens:
einer AN-IC-Anwendung (50), die konfiguriert ist, um einen oder mehrere AN-Parameter von einem Schnittstellenknoten (70) über die AN-IC (60) anzufordern und/oder zu abonnieren;
einem oder mehreren Richtlinienelementen, wobei jedes Richtlinienelement ein Verhalten enthält, das auf übereinstimmende Anfragen oder einen zugehörigen AN-Parameter anzuwenden ist, wobei sich Verhalten auf das Zulassen/Ablehnen einer Anfrage, das Modifizieren eines AN-Parameters und/oder das Erzeugen eines weiteren AN-Parameters analog zu dem AN-Parameter bezieht; und
einer oder mehreren logischen Verbindungen zwischen der AN-IC (60) und den Schnittstellenknoten (70),
wobei die AN-IC (60) konfiguriert ist zum:
Zuordnen von Richtlinienelementen zu entsprechenden Anfragen;
Senden einer Anfrage für einen AN-Parameter bezogen auf den Schnittstellenknoten (70) an einen Schnittstellenknoten (70);
Empfangen einer Schnittstellenknoten-Nachricht, die den angeforderten AN-Parameter enthält, von dem Schnittstellenknoten (70);
Empfangen einer weiteren Anfrage für den angeforderten AN-Parameter von der AN-IC-Anwendung (50);
Zuordnen der weiteren Anfrage zu einem Richtlinienelement basierend auf in der weiteren Anfrage oder Schnittstellenknotennachricht enthaltenen Informationen, wobei die Informationen mindestens eines sind von:
einem E2-Dienstmodell, E2SM, wie ein oder mehrere Parameter, die zu dem E2-Dienstmodell gehören;
Schnittstellenknoten, der eine Schnittstellenknoten-Kennung oder eine Objektkennung, OID, ist, die den Typ des Schnittstellenknotens identifiziert;
angefordertem AN-Parameter, der ein Objektidentifikator, OID, ist, der eine Variable innerhalb eines Schnittstellenknotens oder innerhalb eines E2-Dienstmodells identifiziert; und
Anforderer-AN-IC-Anwendung (50), die eine xApp-Anwendungskennung oder rApp-Anwendungskennung ist.

11. AN nach Anspruch 10, wobei:
das AN ein Funkzugangsnetz, RAN, ist, wobei eine AN-Komponente eines ist von: einer Funkeinheit, RU; einer Zentraleinheit, CU; oder einer verteilten Einheit, DU und/oder
die AN-IC (60) konfiguriert ist, um an die AN-IC-Anwendung (50) eine Nachricht zu senden, enthaltend:
wenn das Zuordnungsverhalten das Erzeugen eines weiteren AN-Parameters analog zu dem AN-Parameter anzeigt, einen weiteren AN-Parameter analog zu dem AN-Parameter;
wenn das Zuordnungsverhalten eine Modifikation eines AN-Parameters anzeigt, einen modifizierten AN-Parameter, der von dem AN-Parameter abgeleitet ist; und
wenn das Zuordnungsverhalten eine Ablehnung der Anfrage anzeigt, eine Nachricht, die die Anwendungsanfrage ablehnt.

12. AN nach Anspruch 10 oder 11,
wobei das Modifizieren eines AN-Parameters sich auf das Ersetzen, Entfernen, Neu-Zuordnen, Hashen, Verschlüsseln, Verschleiern oder anderweitiges Ändern von AN-Parametern oder Teilen davon bezieht, und/oder
die AN-IC (60) ferner konfiguriert ist, um das Verhalten aus dem übereinstimmenden Richtlinienelement auf den von dem Schnittstellenknoten (70) empfangenen AN-Parameter anzuwenden.

13. AN nach einem der Ansprüche 10 bis 12, wobei die AN-IC (60) ferner eine gemeinsame Datenschicht (61), SDL, aufweist, die konfiguriert ist, um AN-Parameter zu speichern, und die AN-IC (60) ferner konfiguriert ist zum:
Speichern, nach Empfangen der weiteren Anfrage für den angeforderten AN-Parameter, des empfangenen AN-Parameters in der SDL (61);
Abrufen des AN-Parameters aus der SDL (61);
Anwenden des Verhaltens aus dem übereinstimmenden Richtlinienelement auf den abgerufenen AN-Parameter.

14. AN nach einem der Ansprüche 10 bis 12, wobei die AN-IC (60) ferner eine gemeinsame Datenschicht (61), SDL aufweist, die konfiguriert ist, um AN-Parameter zu speichern, und die AN-IC (60) ferner konfiguriert ist zum:
Anwenden des Verhaltens aus dem übereinstimmenden Richtlinienelement auf den AN-Parameter;
Speichern, nach Empfangen der weiteren Anfrage für den angeforderten AN-Parameter, des empfangenen AN-Parameters in der SDL (61); und
Abrufen, durch die AN-IC (60), des AN-Parameters aus der SDL (61).

15. Zugangsnetzwerk (AN), aufweisend eine oder mehrere AN-Komponenten und eine intelligente AN-Steuerung (60), AN-IC, wobei jede AN-Komponente einen Schnittstellenknoten (70) enthält, wobei eine AN-IC (60) zusammengesetzt ist aus mindestens:
einer Anwendung (50-A), die konfiguriert ist, um einen oder mehrere AN-Parameter von einem Schnittstellenknoten (70) über eine AN-IC-Anwendung (50-B) anzufordern und/oder zu abonnieren;
einer AN-IC-Anwendung (50-B), die konfiguriert ist, um einen oder mehrere AN-Parameter von einem Schnittstellenknoten (70) über die AN-IC (60) anzufordern und/oder zu abonnieren;
einem oder mehreren Richtlinienelementen, wobei jedes Richtlinienelement ein Verhalten enthält, das auf übereinstimmende Anfragen oder einen zugehörigen AN-Parameter anzuwenden ist, wobei sich Verhalten auf das Zulassen/Ablehnen einer Anfrage, das Modifizieren eines AN-Parameters und/oder das Erzeugen eines weiteren AN-Parameters analog zu dem AN-Parameter bezieht; und
einer oder mehreren logischen Verbindungen zwischen der AN-IC (60) und den Schnittstellenknoten (70), wobei:
die AN-IC-Anwendung (50-B) konfiguriert ist, um Richtlinienelemente übereinstimmenden Anfragen zuzuordnen;
die AN-IC (60) konfiguriert ist, um an einen Schnittstellenknoten (70) eine Anfrage für einen AN-Parameter zu senden, der sich auf den Schnittstellenknoten (70) bezieht;
die AN-IC (60) konfiguriert ist, um von einem Schnittstellenknoten (70) eine Schnittstellenknoten-Nachricht zu empfangen, die den angeforderten AN-Parameter enthält;
die Anwendung (50-A) konfiguriert ist, um an die AN-IC-Anwendung (50-B) eine Anwendungsanfrage für einen zweiten AN-Parameter zu senden, wobei der zweite AN-Parameter sich auf den AN-Parameter bezieht;
die AN-IC (60) konfiguriert ist, um von der AN-IC-Anwendung (50-B) eine weitere Anfrage für den AN-Parameter zu empfangen, wobei der AN-Parameter sich auf den zweiten AN-Parameter bezieht;
die AN-IC-Anwendung (50-B) konfiguriert ist, um von der AN-IC (60) eine Nachricht zu empfangen, die den in der weiteren Anfrage angeforderten AN-Parameter enthält;
die AN-IC-Anwendung (50-B) konfiguriert ist, um die weitere Anfrage einem Richtlinienelement basierend auf in der Anwendungsanfrage für einen zweiten AN-Parameter enthaltenen Informationen zuzuordnen, wobei die Informationen mindestens eines sind von:
Schnittstellenknoten und/oder Schnittstellenknotentyp, wobei es sich um eine Schnittstellenknoten-Kennung oder eine Objektkennung, OID, handelt, die den Typ des Schnittstellenknotens identifiziert;
angefordertem AN-Parameter, der ein Objektidentifikator, OID, ist, der eine Variable innerhalb eines Schnittstellenknotens oder innerhalb eines E2-Dienstmodells identifiziert; und
Anforderer-AN-IC-Anwendung (50-B), die eine xApp-Anwendungskennung oder rApp-Anwendungskennung ist.

## Revendications

1. Procédé permettant d'améliorer une confidentialité dans un réseau d'accès, AN, comprenant un ou plusieurs composants AN et un contrôleur intelligent AN, AN-IC, dans lequel au moins un composant AN contient un nœud d'interface, dans lequel un AN-IC est composé d'au moins :
une application AN-IC configurée pour demander et/ou souscrire à un ou plusieurs paramètres AN à partir d'un nœud d'interface, par l'intermédiaire de l'AN-IC ;
un ou plusieurs éléments de politique, chaque élément de politique contenant un comportement à appliquer à des demandes correspondantes ou à un paramètre AN relatif, dans lequel un comportement consiste à autoriser/rejeter une demande, à modifier un paramètre AN et/ou à générer un paramètre AN supplémentaire, analogue au paramètre AN ; et
une ou plusieurs connexions logiques entre l'AN-IC et les nœuds d'interface,
dans lequel l'AN-IC est configuré pour mettre en correspondance des éléments de politique avec des demandes correspondantes, le procédé comprenant les étapes suivantes consistant à :
envoyer (S100), par l'AN-IC à un nœud d'interface, une demande de paramètre AN relatif au nœud d'interface ;
recevoir (S200), par l'AN-IC en provenance du nœud d'interface, un message de nœud d'interface contenant le paramètre AN demandé ;
recevoir (S300), par l'AN-IC en provenance de l'application AN-IC, une demande supplémentaire de paramètre AN ;
mettre en correspondance (S400), par l'AN-IC, la demande supplémentaire avec un élément de politique sur la base d'informations contenues dans la demande supplémentaire ou le message de nœud d'interface, les informations étant au moins l'un parmi :
un nœud d'interface et/ou un type de nœud d'interface étant un identificateur de nœud d'interface ou un identificateur d'objet, OID, identifiant le type du nœud d'interface ;
un paramètre AN demandé étant un identificateur d'objet, OID, identifiant une variable dans un nœud d'interface ou dans un modèle de service E2 ; et
une application AN-IC de demandeur est un identificateur d'application xApp ou un identificateur d'application rApp.

2. Procédé selon la revendication 1, comprenant en outre :
l'envoi (S500), par l'AN-IC à l'application AN-IC, d'un message contenant :
si le comportement correspondant indique la génération d'un paramètre AN supplémentaire, analogue au paramètre AN, un paramètre AN supplémentaire, analogue au paramètre AN ;
si le comportement correspondant indique la modification d'un paramètre AN, un paramètre AN modifié dérivé du paramètre AN ; et
si le comportement correspondant indique le rejet de la demande, un message rejetant la demande d'application.

3. Procédé selon la revendication 1 ou 2, dans lequel l'AN est un réseau d'accès radio, RAN, dans lequel un composant AN est l'un parmi : une unité radio, RU ; une unité centrale, CU ; ou une unité distribuée, DU, et/ou
dans lequel la modification d'un paramètre AN consiste à remplacer, supprimer, remapper, hacher, chiffrer, obscurcir ou modifier de toute autre manière des paramètres AN ou des parties de ceux-ci.

4. Procédé selon l'une quelconque des revendications précédentes, comprenant en outre :
l'application (S210), par l'AN-IC, du comportement de l'élément de politique correspondant au paramètre AN reçu.

5. Procédé selon l'une quelconque des revendications précédentes, dans lequel l'AN-IC comprend en outre une couche de données partagées, SDL, configurée pour stocker des paramètres AN, comprenant en outre :
le stockage (S310), après l'étape de réception (S300), par l'AN-IC, du paramètre AN reçu dans la SDL.

6. Procédé selon la revendication 5, comprenant en outre :
la récupération (S320), après l'étape de stockage (S310), par l'AN-IC, du paramètre AN de la SDL ;
l'application (S325), par l'AN-IC, du comportement de l'élément de politique correspondant au paramètre AN récupéré.

7. Procédé selon la revendication 5, comprenant en outre :
avant le stockage (S310), l'application (S305), par l'AN-IC, du comportement de l'élément de politique correspondant au paramètre AN ; et
après le stockage (S310), la récupération (S320), par l'AN-IC, du paramètre AN de la SDL.

8. Procédé permettant d'améliorer une confidentialité dans un réseau d'accès, AN, comprenant un ou plusieurs composants AN et un contrôleur intelligent AN, AN-IC, dans lequel chaque composant AN contient un nœud d'interface, dans lequel un AN-IC est composé d'au moins :
une application configurée pour demander et/ou souscrire à un ou plusieurs paramètres AN à partir d'un nœud d'interface, par l'intermédiaire d'une application AN-IC ;
une application AN-IC configurée pour demander et/ou souscrire à un ou plusieurs paramètres AN à partir d'un nœud d'interface, par l'intermédiaire de l'AN-IC ;
un ou plusieurs éléments de politique, chaque élément de politique contenant un comportement à appliquer à des demandes correspondantes ou à un paramètre AN relatif, dans lequel un comportement consiste à autoriser/rejeter une demande, à modifier un paramètre AN et/ou à générer un paramètre AN supplémentaire, analogue au paramètre AN ; et
une ou plusieurs connexions logiques entre l'AN-IC et les nœuds d'interface,
dans lequel l'application AN-IC est configurée pour mettre en correspondance des éléments de politique avec des demandes correspondantes, le procédé comprenant les étapes suivantes consistant à :
envoyer (S1000), par l'AN-IC à un nœud d'interface, une demande de paramètre AN relatif au nœud d'interface ;
recevoir (S2000), par l'AN-IC en provenance d'un nœud d'interface, un message de nœud d'interface contenant le paramètre AN demandé ;
envoyer (S3000), par l'application à l'application AN-IC, une demande de second paramètre AN, dans lequel le second paramètre AN est relatif au paramètre AN ;
recevoir (S4000), par l'AN-IC en provenance de l'application AN-IC, une demande supplémentaire de paramètre AN, dans lequel le paramètre AN est relatif au second paramètre AN ;
recevoir (S4500), par l'application AN-IC en provenance de l'AN-IC, un message contenant le paramètre AN demandé dans la demande supplémentaire ;
mettre en correspondance (S5000), par l'application AN-IC, la demande supplémentaire avec un élément de politique sur la base d'informations contenues dans la demande d'application de second paramètre AN, les informations étant au moins l'un parmi :
un nœud d'interface et/ou un type de nœud d'interface étant un identificateur de nœud d'interface ou un identificateur d'objet, OID, identifiant le type du nœud d'interface ;
un paramètre AN demandé étant un identificateur d'objet, OID, identifiant une variable dans un nœud d'interface ou dans un modèle de service E2 ; et
une application AN-IC de demandeur est un identificateur d'application xApp ou un identificateur d'application rApp.

9. Procédé selon la revendication 8, comprenant en outre :
l'envoi (S6000), par l'application AN-IC à l'application, d'un message contenant :
si le comportement correspondant indique la génération d'un paramètre AN supplémentaire, analogue au paramètre AN, un second paramètre AN supplémentaire, analogue au second paramètre AN ;
si le comportement correspondant indique la modification d'un paramètre AN, un second paramètre AN modifié dérivé du second paramètre AN ; et
si le comportement correspondant indique le rejet de la demande, un message rejetant la demande d'application.

10. Réseau d'accès, AN, comprenant un ou plusieurs composants AN et un contrôleur intelligent AN (60), AN-IC, dans lequel au moins un composant AN contient un nœud d'interface (70), dans lequel un AN-IC (60) est composé d'au moins :
une application AN-IC (50) configurée pour demander et/ou souscrire à un ou plusieurs paramètres AN à partir d'un nœud d'interface (70), par l'intermédiaire de l'AN-IC (60) ;
un ou plusieurs éléments de politique, chaque élément de politique contenant un comportement à appliquer à des demandes correspondantes ou à un paramètre AN relatif, dans lequel un comportement consiste à autoriser/rejeter une demande, à modifier un paramètre AN et/ou à générer un paramètre AN supplémentaire, analogue au paramètre AN ; et
une ou plusieurs connexions logiques entre l'AN-IC (60) et les nœuds d'interface (70),
dans lequel l'AN-IC (60) est configuré pour :
mettre en correspondance des éléments de politique avec des demandes correspondantes ;
envoyer, à un nœud d'interface (70), une demande de paramètre AN relatif au nœud d'interface (70) ;
recevoir, en provenance du nœud d'interface (70), un message de nœud d'interface contenant le paramètre AN demandé ;
recevoir, en provenance de l'application AN-IC (50), une demande supplémentaire du paramètre AN demandé ;
mettre en correspondance la demande supplémentaire avec un élément de politique sur la base d'informations contenues dans la demande supplémentaire ou un message de nœud d'interface, les informations étant au moins l'un parmi :
un modèle de service E2, E2SM, tel qu'un ou plusieurs paramètres appartenant au modèle de service E2 ;
un nœud d'interface étant un identificateur de nœud d'interface ou un identificateur d'objet, OID, identifiant le type du nœud d'interface ;
un paramètre AN demandé étant un identificateur d'objet, OID, identifiant une variable dans un nœud d'interface ou dans un modèle de service E2 ; et
une application AN-IC de demandeur (50) étant un identificateur d'application xApp ou un identifiant d'application rApp.

11. AN selon la revendication 10, dans lequel :
l'AN est un réseau d'accès radio, RAN, dans lequel un composant AN est l'un parmi : une unité radio, RU ; une unité centrale, CU ; ou une unité distribuée, DU, et/ou
l'AN-IC (60) est configuré pour envoyer à l'application AN-IC (50) un message contenant :
si le comportement correspondant indique la génération d'un paramètre AN supplémentaire, analogue au paramètre AN, un paramètre AN supplémentaire, analogue au paramètre AN ;
si le comportement correspondant indique la modification d'un paramètre AN, un paramètre AN modifié dérivé du paramètre AN ; et
si le comportement correspondant indique le rejet de la demande, un message rejetant la demande d'application.

12. AN selon la revendication 10 ou 11,
dans lequel la modification d'un paramètre AN consiste à remplacer, supprimer, remapper, hacher, chiffrer, obscurcir ou modifier de toute autre manière des paramètres AN ou des parties de ceux-ci, et/ou
l'AN-IC (60) est en outre configuré pour appliquer le comportement de l'élément de politique correspondant au paramètre AN reçu en provenance du nœud d'interface (70).

13. AN selon l'une quelconque des revendications 10 à 12, dans lequel l'AN-IC (60) comprend en outre une couche de données partagées (61), SDL, configurée pour stocker des paramètres AN, et l'AN-IC (60) est en outre configuré pour :
stocker, après réception de la demande supplémentaire du paramètre AN demandé, le paramètre AN reçu dans la SDL (61) ;
récupérer le paramètre AN de la SDL (61) ;
appliquer le comportement de l'élément de politique correspondant au paramètre AN récupéré.

14. AN selon l'une quelconque des revendications 10 à 12, dans lequel l'AN-IC (60) comprend en outre une couche de données partagées (61), SDL, configurée pour stocker des paramètres AN, et l'AN-IC (60) est en outre configuré pour :
appliquer le comportement de l'élément de politique correspondant au paramètre AN ;
stocker, après réception de la demande supplémentaire du paramètre AN demandé, le paramètre AN reçu dans la SDL (61) ; et
récupérer, par l'AN-IC (60), le paramètre AN de la SDL (61).

15. Réseau d'accès, AN, comprenant un ou plusieurs composants AN et un contrôleur intelligent AN (60), AN-IC, dans lequel chaque composant AN contient un nœud d'interface (70), dans lequel un AN-IC (60) est composé d'au moins :
une application (50-A) configurée pour demander et/ou souscrire à un ou plusieurs paramètres AN à partir d'un nœud d'interface (70), par l'intermédiaire d'une application AN-IC (50-B) ;
une application AN-IC (50-B) configurée pour demander et/ou souscrire à un ou plusieurs paramètres AN à partir d'un nœud d'interface (70), par l'intermédiaire de l'AN-IC (60) ;
un ou plusieurs éléments de politique, chaque élément de politique contenant un comportement à appliquer à des demandes correspondantes ou à un paramètre AN relatif, dans lequel un comportement consiste à autoriser/rejeter une demande, à modifier un paramètre AN et/ou à générer un paramètre AN supplémentaire, analogue au paramètre AN ; et
une ou plusieurs connexions logiques entre l'AN-IC (60) et les nœuds d'interface (70), dans lequel :
l'application AN-IC (50-B) est configurée pour mettre en correspondance des éléments de politique avec des demandes correspondantes ;
l'AN-IC (60) est configuré pour envoyer, à un nœud d'interface (70), une demande de paramètre AN relatif au nœud d'interface (70) ;
l'AN-IC (60) est configuré pour recevoir, en provenance d'un nœud d'interface (70), un message de nœud d'interface contenant le paramètre AN demandé ;
l'application (50-A) est configurée pour envoyer, à l'application AN-IC (50-B), une demande de second paramètre AN, dans lequel le second paramètre AN est relatif au paramètre AN ;
l'AN-IC (60) est configuré pour recevoir, en provenance de l'application AN-IC (50-B), une demande supplémentaire de paramètre AN, dans lequel le paramètre AN est relatif au second paramètre AN ;
l'application AN-IC (50-B) est configurée pour recevoir, en provenance de l'AN-IC (60), un message contenant le paramètre AN demandé dans la demande supplémentaire ;
l'application AN-IC (50-B) est configurée pour mettre en correspondance la demande supplémentaire avec un élément de politique sur la base d'informations contenues dans la demande d'application de second paramètre AN, les informations étant au moins l'un parmi :
un nœud d'interface et/ou un type de nœud d'interface étant un identificateur de nœud d'interface ou un identificateur d'objet, OID, identifiant le type du nœud d'interface ;
un paramètre AN demandé étant un identificateur d'objet, OID, identifiant une variable dans un nœud d'interface ou dans un modèle de service E2 ; et
une application AN-IC de demandeur (50-B) étant un identificateur d'application xApp ou un identificateur d'application rApp.
